Europäisches Patentamt

**European Patent Office**

Office européen des brevets

(11) Veröffentlichungsnummer: **0 072 433**
**B1**

(12) **EUROPÄISCHE PATENTSCHRIFT**

(45) Veröffentlichungstag der Patentschrift:
12.12.84

(21) Anmeldenummer: 82106287.4

(22) Anmeldetag: 14.07.82

(51) Int. Cl.³: **C 09 J 3/16, C 08 G 63/66**

(54) **Polyätherester für das Verkleben von Textilien.**

(30) Priorität: 13.08.81 DE 3132059

(43) Veröffentlichungstag der Anmeldung:
23.02.83 Patentblatt 83/8

(45) Bekanntmachung des Hinweises auf die Patenterteilung:
12.12.84 Patentblatt 84/50

(84) Benannte Vertragsstaaten:
AT BE CH DE FR GB IT LI LU NL SE

(56) Entgegenhaltungen:
DE - A - 2 705 270
FR - A - 2 148 537

(73) Patentinhaber: **DYNAMIT NOBEL AKTIENGESELLSCHAFT, Postfach 1209, D-5210 Troisdorf, Bez. Köln (DE)**

(72) Erfinder: **Schade, Gerhard, Dr., Akazienweg 13, D-5810 Witten (DE)**
Erfinder: **Uckert, Peter, Dr., Am Wolfsbach 101, D-5202 St. Augustin 2 (DE)**

EP 0 072 433 B1

# 0 072 433

## Beschreibung

Die Erfindung betrifft Polyätherester für das Verkleben von Textilien auf Basis Terephthalsäure, Isophthalsäure, 1,4-Butandiol und eines Polyalkylenätherdiols mit einem Schmelzpunkt der Polyester bei 95 bis 125°C und einer relativen Viskosität, gemessen bei 25°C an 1 g Polyester in 100 ml eines Gemisches aus 60 Gew.-Teilen Phenol und 40 Gew.-Teilen 1,1,2,2-Tetrachloräthan von 1,85 bis 2,20.

Für das Verkleben textiler Substrate, z. B. von Einlage- mit Oberstoffen zwecks Erzielung einer versteifenden Wirkung, werden Polymere verwendet, die meistens — als Pulver fein verteilt — in regelmäßiger Anordnung auf die Innenseite eines der zu verklebenden Textilien gebracht, dann durch Einwirkung von Wärme partiell angeschmolzen und dadurch zum Ansintern gebracht werden (wodurch die Textilien handhabbar werden), wonach das Aufbügeln des zu versteifenden Oberstoffes durch erneute Anwendung von Wärme und gleichzeitigem Druck in sogenannten Bügelpressen erfolgt.

Als Polymere für die Verwendung als Textilbügelpulver ist bereits eine Anzahl verschiedener Mischpolyester vorgeschlagen worden. Diese Polyester sind unzureichend beständig gegen die Einwirkung organischer Lösungsmittel, wie sie bei der Chemischreinigung von Textilien verwendet werden, sofern die Polyester ausschließlich Reste niedermolekularer Dicarbonsäuren und Dialkohole enthalten. Derart zusammengesetzte Polyester und ihre Verwendung als Textilkleber sind verschiedentlich beschrieben (US-PS 3 669 921, DE-OS 1 920 432, US—PS 3 948 859, DE-OS 3 037 100, DE-OS 2 435 863 u. a.). Diese Polyester werden überwiegend bei Textilien verwendet, die üblicherweise nur durch Waschen gereinigt werden, wie z. B. zum Versteifen von Hemdkragen, Manschetten, Blusen und dergleichen. Um sowohl wasch- als auch Chemischreinigungs-beständige Verklebungen von Textilien zu erhalten, wurde die Verwendung von Block-Copolyätherestern vorgeschlagen. So wird (JP-OS 54-153 835) ein Polyätherester als Textilkleber empfohlen, der a) 70—40 Mol-% Terephthalsäure-, b) 30—60 Mol-% Isophthalsäure-, c) 1,4-Butandiol-Reste sowie d) 1—10 Gew.-% (auf die Summe von a) bis d) bezogen) Reste eines Polyalkylenäther-diols mit einer molaren Masse von 0,3 bis 6 kg/mol einkondensiert enthält; die Komponente d) schließt Polyethylenglykol mit ein, wenn auch Poly-Tetramethylenglykol bevorzugt wird. Derartige Polyester haben infolge der geringen Konzentration an der Komponente d) eine vergleichsweise hohe Schmelzviskosität, so daß relativ hohe Bügeltemperaturen und/oder lange Einbügelzeiten bzw. hohe Anpreßdrucke für das Herstellen der Klebverbindungen erforderlich werden. Dadurch können temperaturempfindlichere Stoffe unter Umständen bereits geschädigt werden.

Es wurde auch schon vorgeschlagen, die Bestandteile a) bis c) beizubehalten und die Konzentration des Bestandteils d) auf 10—33 Gew.-% (berechnet wie oben) anzuheben, wobei der Bestandteil d) einen Rest des Polytetramethylenglykols der molaren Massen 0,6 bis 1,3 kg/mol bedeutet (DE-OS 2 705 270). Die bei Verwendung erhöhter Konzentrationen des Bestandteils d) ausschließliche Verwendung von Polytetramethylenglykol beruht darauf, daß Polyethylenglykol in erhöhten Konzentrationen die Wasserempfindlichkeit derartiger Blockpolyester erhöht und die Waschbeständigkeit daraus hergestellter Textilverklebungen verschlechtert. So wird (DE-OS 2 451 369) für Gemische aus Blockpolyätherestern mit Dianhydriden und deren Verwendung zum Verkleben glattflächiger Substrate beschrieben, daß als Weichsegmente einzukondensierende, langkettige Polyalkylenätherdiole mit einem Molverhältnis von Kohlenstoff zu Sauerstoff von mehr als etwa 2,5 : 1 im allgemeinen in Wasser weniger quellende und gegen Hydrolyse widerstandsfähigere Blockpolyester lieferten. Spielt also der Gesichtspunkt der Wasserempfindlichkeit, wie im Fall der Textilkleber-Polyester, eine verwendungswesentliche Rolle, so wurde Polyethylenglykol zweckmäßig nicht verwendet, es sei denn (JP-OS 54-153 835), in niedrigen Konzentrationen.

Die erfindungsgemäßen Polyester haben eine »Offene Zeit« von nur 5—10 s. Wählt man im Bereich der erfindungsgemäßen Polyester-Zusammensetzungen das Verhältnis von Terephthal- zu Isophthalsäure so, daß die »Offene Zeit« bei einem Terephthalsäure-Isophthalsäure-Verhältnis von 45—40 : 55—60 dem Wert von 15 s nahekommt (DE-OS 2 629 102), so erweisen sich aus derartigen Polyestern hergestellte Textilverklebungen als außerordentlich schlecht chemischreinigungsbeständig und damit als unbrauchbar für den angestrebten Verwendungszweck.

Polyätherester der erfindungsgemäßen Art, die außerhalb der erfindungsgemäßen Zusammensetzung bleiben, liefern im wesentlichen amorphe, während des Abkühlvorgangs nicht kristallisierende Produkte (DE-OS 2 264 303). Sie sind nicht chemischreinigungsbeständig und daher für den erfindungsgemäßen Verwendungszweck nicht brauchbar.

Erfindungsaufgabe ist, hochmolekulare Polyätherester zur Verfügung zu stellen, die sowohl bezüglich der Chemischreinigungs- als auch der Waschbeständigkeit damit hergestellter Textilverklebungen den Anforderungen der Praxis voll genügen und wirtschaftlich herstellbar sind.

Gegenstand der Erfindung sind Polyätherester der eingangs bezeichneten Art gemäß dem kennzeichnenden Teil des Hauptanspruchs.

Die erfindungsgemäßen Polyätherester weisen den Vorteil auf, bei niedrigen Temperaturen und/ oder in kürzerer Zeit einbügelbar zu sein, da ihre Schmelzviskosität infolge der erhöhten Konzentration an einzukondensierendem Polyethylenätherdiol wesentlich niedriger liegt.

Das bevorzugte Molverhältnis von Terephthal- und Isophthalsäure von etwa 50 : 50 liefert als Polykondensat mit lediglich 1,4-Butandiol Polyester mit einem Schmelzpunkt von etwa 125°C und mit als

2

zweckmäßig befundenen Kristallisationsgraden und -geschwindigkeiten. Wird — hiervon ausgehend — der Terephthalsäuregehalt zu Lasten des Isophthalsäure-Gehaltes erhöht, so erhöht sich der Schmelzpunkt, wodurch die Leichtigkeit des Einbügelns beeinträchtigt wird. Wird die Zusammensetzung im entgegengesetzten Sinn verändert, so wird die Kristallisierbarkeit alsbald so weit beeinträchtigt, daß die Chemischreinigungsbeständigkeit weitgehend verlorengeht, wenn zusätzlich Polyethylenglykol einkondensiert ist.

Die Anwesenheit von Resten des Polyethylenglykols ändert an Kristallisationsgrad und -geschwindigkeit des nicht hiermit modifizierten Polyesters nur wenig. Bei konstant gehaltenen Gewichtsanteilen Polyethylenglykol im Polyester wird der Schmelzpunkt in bekannter Weise um so stärker erniedrigt, je niedriger die molare Masse des Polyethylenglykols ist. Werden besonders niedrige Schmelzpunkte angestrebt, um sehr temperaturempfindliche Stoffe verkleben zu können, so lassen sich untergeordnete Mengen niedrigermolekularer Alkylenätherdiole, wie Di- und/oder Triglykol mitverwenden; es sollten jedoch nicht mehr als etwa 10 Gew.-% an Resten des Polyglykols durch solche dieser niedermolekularen Alkylenätherdiole ersetzt werden, da letztere die Kristallisationsfähigkeit der Polyester sehr stark herabsetzen und damit die Chemischreinigungs- und/oder Waschbeständigkeit daraus hergestellter Klebverbindungen beeinträchtigen.

Die Polyester weisen relative Viskositäten von 1,85 bis 2,20, bevorzugt von wenigstens 1,90 — gemessen an 100 ml Lösungen, enthaltend 1 g Polymer — auf, wobei als Lösungsmittel ein Gemisch aus 60 Gew.-% Phenol und 40 Gew.-% 1,1,2,2-Tetrachloräthan verwendet und die Messung mittels eines Ubbelohde-Viskosimeters bei 25°C durchgeführt wird. Bei niedrigen Werten der rel. Viskosität ($\eta_{rel}$) wird häufig eine unerwünscht niedrige Haftfestigkeit der Verklebungen entweder schon vor oder erst nach der Wäsche und/oder der Chemischreinigung festgestellt.

Höhere Werte von $\eta_{rel}$ führen andererseits zu unnötig hohen Schmelzviskositäten, wodurch die Benetzung der Textilfasern erschwert wird und demzufolge vergleichsweise lange Verklebungszeiten und/oder hohe Verklebungstemperaturen in Kauf genommen werden müssen. Die Werte von $\eta_{rel}$ liegen daher bei 1,90 bis 2,20, wobei der Bereich zwischen 1,95 und 2,05 besonders bevorzugt wird.

Polyethylenglykol verleiht daraus hergestellten Polyätherestern bekanntlich eine besonders hohe thermisch-oxidative Anfälligkeit, weshalb zweckmäßig Stabilisatoren bei der Polyätheresterherstellung mitverwendet werden sollten [H. Zimmermann, K. Dietrich, Acta Polym. 1979, 30 (4), 199—203].

In der Praxis werden weitere Zusätze, wie Nukleierungsmittel, z. B. Mikrotalkum, Antistatika, Gleitmittel, Wachse od. dgl., als Vermahlungshilfsmittel usw. entweder schon den Polyätheresterschmelzen oder beim oder nach dem Vermahlen der Polyätherester angewendet.

Die Herstellung der Polyätherester erfolgt prinzipiell nach den üblichen Schmelzkondensationsverfahren. Ein typischer erfindungsgemäßer Polyätherester wurde wie folgt hergestellt:

In einen 40-l-Reaktor aus rostfreiem Stahl wurden 9,7 kg Dimethylterephthalat (50 Mol), 10,8 kg 1,4-Butandiol (120 Mol), 2,7 kg Polyethylenglykol (entspr. 11 Gew.-%, bezogen auf den theoret. entstehenden Polyester), 25 g Tetrabutyltitanat und 43 g 2-Äthylhexandiol-1,2 eingefüllt.

Nach Verdrängung der Luft durch Stickstoff wurde unter Normaldruck aufgeheizt; bei einer Innentemperatur von 120—130°C das Rührwerk eingeschaltet und bis zu einer End-Temperatur von 180°C 3,1 l Destillat (im wesentlichen Methanol) mit einer Kolonnenkopf-Temperatur von 62—67°C entfernt. Unter Umgehung der Kolonne wurden weitere 0,7 l Destillat erhalten. Danach wurde auf 160°C abgekühlt, entgegen einem starken Stickstoffstrom 8,7 kg Isophthalsäure (50 Mol) zugesetzt, die Temperatur auf 190—200°C eingestellt und 2 l Destillat (im wesentlichen Wasser) über die Kolonne abgetrieben. Danach wurden 13,5 g Irganox 1010® zugegeben, die Temperatur auf 240—245°C angehoben und zugleich Vakuum angelegt. Bei 245°C und einem Druck von unter $1,33 \cdot 10^{-3}$ bar wurde gerührt, bis die Zunahme des Rührwiderstandes einen vorbestimmten, empirisch ermittelten Wert anzeigte. Sodann wurde das Vakuum durch Stickstoff aufgehoben, die Schmelze abgelassen, erstarren gelassen und zerkleinert.

So erhaltene Granulate wurden unter Kühlung mit flüssigem Stickstoff gemahlen, die Korngrößen-Fraktion 80—200 μm ausgesiebt, die Kornfraktion auf einen Baumwoll-Einlagestoff mittels eines regelmäßig perforierten Bleches punktförmig aufgebracht, wobei ein Auflagegewicht von 21 g/m² erzielt wurde, und die Pulverpunkte durch kurzfristiges Erhitzen einer unter dem Stoff liegenden Aluminium-Unterlage angesintert (~10—15 s, 160°C). Auf den so präparierten Einlagestoff wurde mittels einer Bügelpresse ein Oberstoff aus einem Polyester-Baumwoll-Mischgewebe unter einem Druck von 0,3 bar und einer Temperatur von 160°C in einer Zeit von 20 s aufgebügelt. Der so geschaffene Textilverbund wurde in 5 cm breite Streifen geschnitten und die Abschälfestigkeit vor und nach 1stündigem Lagern in Perchloräthylen (Per) bzw. einer oder mehrerer 60°C-Wäschen gemessen. Die dabei erhaltenen Ergebnisse sind für die Beispiele im folgenden tabellarisch wiedergegeben.

| Beispiel | T/I/BD (Mol-%) | PEG (Gew.-%) | PEG (kg/mol) | $\eta_{rel}$ | $T_m(°C)$ |
|---|---|---|---|---|---|
| 1 | 50/50/100 | 11 | 0,4 | 1,90 | 120 |
| 2 | 50/50/100 | 15 | 0,4 | 1,95 | 118 |
| 3 | 50/50/100 | 20 | 0,4 | 1,98 | 115 |
| 4 | 50/50/100 | 11 | 1,55 | 1,90 | 123 |
| 5 | 50/50/100 | 11 | 4,0 | 1,95 | 124 |
| 6 | 50/50/100 | 25 | 4,0 | 2,10 | 123 |
| 7 | 50/50/100 | 11 | 6,0 | 1,98 | 120 |
| 8 | 50/50/100 | 20 | 6,0 | 2,10 | 117 |
| 9 | 50/50/100 | 25 | 6,0 | 2,14 | 115 |
| 10 | 50/50/100 | 20+2 TEG | 0,4 | 2,05 | 105 |

Hierin bedeuten:
T, I und BD Reste der Terephthal-, der Isophthalsäure und des 1,4-Butandiols, PEG Reste des Polyethylenglykols und kg/mol dessen molare Masse, $\eta_{rel}$ die rel. Viskosität, $T_m$ den Schmelzpunkt des Polyesters (Schmelz-Maximum, erhalten durch Differentialthermocalorimetrie) und TEG Reste des Triethylenglykols.

| Beispiel | Haftung (N/5 cm) Anfang | nach Per-Lagerung | | nach 60° C-Wäsche | |
|---|---|---|---|---|---|
| | | 1 × | 5 × | 1 × | 5 × |
| 1 | 30 | 28,5 | 28 | 30 | 29 |
| 2 | 49 | 43 | 40 | 42 | 42 |
| 3 | 52 | 48 | 46 | 47 | 45 |
| 4 | 30 | 28,4 | 28 | 29 | 29 |
| 5 | 31,5 | 30 | 29 | 30,5 | 30 |
| 6 | 40 | 37 | 38 | 35 | 35 |
| 7 | 33,3 | 28 | 29 | — | — |
| 8 | 41,8 | 35 | 36 | 37 | 36 |
| 9 | 41 | 38 | 36,5 | 35 | 34 |
| 10 | 45 | 42 | 42 | 44 | 43 |

Die angegebenen Werte sind die arithmetischen Mittel aus jeweils 3 bis 5 Einzelprüfungen.

Aus den Daten ist ersichtlich, daß im allgemeinen die Haftung bei der Lagerung in Perchloräthylen bzw. beim Waschen zwar zunächst zurückgeht, sich aber bei mehrfacher Wiederholung der entsprechenden Reinigungsvorgänge praktisch nicht mehr ändert. Diese Erscheinung ist demzufolge nicht auf sich wiederholende Lösungs-, Quellungs- oder Abbau-Vorgänge zurückzuführen, sondern auf eine einmalige Änderung des physikalischen Zustandes der verwendeten Polyätherester, vermutlich auf eine Erhöhung des Kristallisationsgrades gegenüber dem Ausgangszustand.

Zum Vergleich wurde eine Zusammensetzung hergestellt, die sich von den Beispielen 3 und 8 dadurch unterscheidet, daß anstelle der 20 Gew.-% Polyethylenglykol-Reste die gleiche Menge an Resten des Polytetramethylenglykols einkondensiert waren; die rel. Viskosität betrug 1,95. Nach der Applikation wie bei den Beispielen 1—10 und nach 5× Lagerung in Perchloräthylen wurde eine Haftfestigkeit von 37,5 N/5 cm gemessen. Dieser Wert wird im Fall des Beispiels 3 noch übertroffen, im Fall des Beispiels 8 sind die vergleichbaren Werte praktisch gleich.

Daß bei auch nur geringer Abweichung in der Zusammensetzung der Grundpolyätherester der Abfall der Klebkraft bei der Chemischreinigung beträchtliche Ausmaße annehmen kann, auch wenn Polyethylenglykol einkondensiert ist, zeigen folgende, nicht erfindungsgemäße Vergleichsbeispiele:

a) Polyester aus 85 Mol-% Terephthalsäure, 15 Mol-% Isophthalsäure, 50 Mol-% 1,4-Butandiol und 1,6-Hexandiol mit $\eta_{rel}$ 1,90.
b) Wie a), zusätzlich enthaltend 11 Gew.-% Reste des Polyethylenglykols einer molaren Menge von 4 kg/mol mit $\eta_{rel}$ 1,95.

Die Haftwerte vor und nach 5maliger Lagerung in Perchloräthylen betrugen:

a) 26 bzw. 13 N/5 cm;
b) 30 bzw. 18 N/5 cm.

Beispiel 5 wurde in der Weise variiert, daß das Molverhältnis von Terephthal- zu Isophthalsäure auf 0,45 : 0,55 abgeändert wurde; der $\eta_{rel}$-Wert betrug 1,90. Die Anfangs-Haftwerte lagen im Mittel bei 30 N/5 cm, um nach 5maliger Lagerung in Perchloräthylen auf 15 N/5 cm abzufallen.

### Patentansprüche für die Vertragsstaaten: BE, CH, DE, FR, GB, IT, LI, LU, NL, SE

1. Polyätherester für das Verkleben von Textilien auf Basis Terephthalsäure, Isophthalsäure, 1,4-Butandiol und eines Polyalkylenätherdiols mit einem Schmelzpunkt der Polyätherester bei 95 bis 125°C und einer relativen Viskosität, gemessen bei 25°C an 1 g Polyätherester in 100 ml eines Gemisches aus 60 Gew.-Teilen Phenol und 40 Gew.-Teilen 1,1,2,2-Tetrachloräthan von 1,85 bis 2,20, gekennzeichnet durch ein Molverhältnis von Terephthalsäure zu Isophthalsäure von 48—55 : 52—45, vorzugsweise 50 : 50, und einen Anteil von 10,5 bis 25 Gew.-%, bezogen auf die Summe aller im Polyätherester enthaltenen Reste, Polyethylenglykol mit einer molaren Masse von 0,4 bis 6 kg/mol.

2. Polyätherester nach Anspruch 1, dadurch gekennzeichnet, daß bis zu 10 Gew.-% Polyethylenglykol durch Di-, Triethylenglykol oder niedrigermolekulare Alkylenätherdiole ersetzt sind.

### Patentansprüche für den Vertragsstaat: AT

1. Verfahren zur Herstellung von Polyätherestern für das Verkleben von Textilien auf Basis Terephthalsäure, Isophthalsäure, 1,4-Butandiol und eines Polyalkylenätherdiols mit einem Schmelzpunkt der Polyätherester bei 95 bis 125°C und einer relativen Viskosität, gemessen bei 25°C an 1 g Polyätherester in 100 ml eines Gemisches aus 60 Gew.-Teilen Phenol und 40 Gew.-Teilen 1,1,2,2-Tetrachloräthan, von 1,85 bis 2,20, dadurch gekennzeichnet, daß man die Komponenten in folgenden Verhältnissen polykondensiert:

a) Molverhältnis von Terephthalsäure zu Isophthalsäure von 48—55 : 52—45, vorzugsweise 50 : 50,
b) einen Anteil von 10,5 bis 25 Gew.-%, bezogen auf die Summe aller im Polyätherester enthaltenen Reste, Polyethylenglykol mit einer molaren Masse von 0,4 bis 6 kg/mol.

2. Verfahren zur Herstellung von Polyätherestern nach Anspruch 1, dadurch gekennzeichnet, daß bis zu 10 Gew.-% Polyethylenglykol durch Di-, Triethylenglykol oder niedrigermolekulare Alkylenätherdiole ersetzt sind.

### Claims for the Contracting States: BE, CH, DE, FR, GB, IT, LI, LU, NL, SE

1. Polyether esters for the bonding of textiles, based on terephthalic acid, isophthalic acid, 1,4-butanediol and a polyalkylene ether diol, with a polyether ester melting point of 95 to 125°C and a relative viscosity, measured at 25°C on 1 g of polyether ester in 100 ml of a mixture of 60 parts by weight phenol and 40 parts by weight 1,1,2,2-tetrachloroethane of 1.85 to 2.20, characterised by a molar ratio of terephthalic acid to isophthalic acid of 48 to 55 : 52 to 45, preferably 50 : 50 and a content of 10.5 to 25% by weight, related to the sum of all the other substances contained in the polyether ester, of polyethylene glycol with a molar mass of 0.4 to 6 kg/mol.

2. Polyether esters according to claim 1, characterised in that up to 10% by weight of polyethylene glycol are replaced by di-, triethylene glycol or lower molecular alkylene ether diols.

**Claims for the Contracting State: AT**

1. Process for the production of polyether esters for the bonding of textiles, based on terephthalic acid, isophthalic acid, 1,4-butanediol and a polyalkylene ether diol, with the polyether ester having a melting point at 95 to 125°C and a relative viscosity, measured at 25°C on 1 g of polyether ester in 100 ml of a mixture of 60 parts by weight of phenol and 40 parts by weight of 1,1,2,2-tetrachloroethane of 1.85 to 2.20, characterised in that the components are polycondensed in the following ratios:

a) molar ratio of terephthalic acid to isophthalic acid of 48 to 55 : 52 to 45, preferably 50 : 50,
b) a content of 10.5 to 25% by weight related to the sum of all the residues contained in the polyether ester, of polyethylene glycol with a molar mass of 0.4 to 6 kg/mol.

2. Process for the production of polyether esters according to claim 1, characterised in that up to 10% by weight of polyethylene glycol are replaced by di-, triethylene glycol or lower molecular alkylene ether diols.

**Revendications pour les Etats contractants: BE, CH, DE, FR, GB, IT, LI, LU, NL, SE**

1. Polyétheresters pour le collage de textiles à base d'acide téréphtalique, d'acide isophtalique, de 1,4-butanediol et d'un polyalkylène-étherdiol, les polyétheresters ayant un point de fusion de 95 à 125°C et une viscosité relative, mesurée à 25°C sur une solution de 1 g de polyétherester dans 100 ml d'un mélange de 60 parties en poids de phénol et de 40 parties en poids de 1,1,2,2 tétrachloréthane, de 1,85 à 2,20, caractérisés par un rapport molaire acide téréphtalique à acide isophtalique de 48—55 à 52—45, de préférence de 50 à 50, et une proportion de 10,5 à 25% en poids, rapportée à la somme de tous les radicaux contenus dans le polyétherester, d'un polyéthylène-glycol ayant une masse molaire de 0,4 à 6 kg/mole.
2. Polyétheresters selon la revendication 1, caractérisés en ce qu'on remplace jusqu'à 10% en poids de polyéthylène-glycol par du di- ou triéthylène glycol ou par des alkylène-éther-diols de faible masse molèculaire.

**Revendications pour l'Etat contractant: AT**

1. Procédé de préparation d'esters de polyéthers pour le collage de textiles à base d'acide téréphtalique, d'acide isophtalique, de 1,4-butanediol et d'un poly(alkylénéther-diol), avec un point de fusion de l'ester de polyéther de 95 à 125°C et une viscosité relative, mesurée à 25°C sur 1 g d'ester de poléther dans 100 ml d'un mélange de 60 parties en poids de phénol et de 40 parties en poids de 1,1,2,2-tétrachloréthane, de 1,85 à 2,20, caractérisé en ce qu'on polycondense les composants dans les proportions suivantes:

a) rapport molaire entre l'acide téréphtalique et l'acide isophtalique de 48—55 à 52—45, de préférence 50 : 50,
b) une partie de 10,5 à 25% en poids, sur la base de la somme de tous les résidus contenus dans l'ester de polyéther, de polyéthylèneglycol ayant une masse molaire de 0,4 à 6 kg/mole.

2. Procédé de préparation d'esters de polyéther selon la revendication 1, caractérisé en ce qu'on remplace jusqu'à 10% en poids de polyéthylèneglycol par du diéthylèneglycol, du triéthylèneglycol ou des alkylénétherdiols à masse moléculaire plus faible.